# EUROPEAN PATENT SPECIFICATION

(11) **EP 0 354 780 B1**
(45) Date of publication and mention of the grant of the patent: **29.06.1994**
(21) Application number: 89308095.2
(22) Date of filing: 09.08.1989
(51) Int. Cl.: B42D 5/02

(54) **Mailer**
Briefumschlag
Enveloppe

(30) Priority: 11.08.1988 US 230916
(43) Date of publication of application: 14.02.1990
(73) Proprietor: MOORE BUSINESS FORMS, INC., Grand Island New York 14072-1697 (US)
(72) Inventor: Jenkins, Richard A., Lindenhurst Illinois 60046 (US); Hutchinson, Wilbur P., Mount Prospect Illinois 60056 (US)
(74) Representative: Spence, Anne

(56) References cited:
- EP-A- 0 088 613
- EP-A- 0 261 844
- FR-A- 2 323 612
- GB-A- 1 593 754
- GB-A- 2 150 883
- US-A- 4 023 727
- US-A- 4 375 868

## Description

### Background of The Invention

The present invention pertains to mailers and particularly to mailers of a type readily enabling computer generated message and address information to be printed on a single paper ply which can be folded to form a self-contained multi-ply mailer. The mailer may be configured so that, when folded, address information is positioned for view without use of a die-cut window.

Thus for example in European Specification no 261844 there is described an envelope in which an insert is nested comprising a sheet of material having given horizontal and vertical dimensions,
the sheet having a first fold line parallel to and between the horizontal end edges thereby providing first and second parts of the sheet and a second fold line perpendicular to the first fold line,
a window in one of the parts of the sheet,
and lines of adhesive on the sheet along portions of the edges thereof,
the arrangement being such that the first part of the sheet may be folded along the first fold line to overlie the second part of the sheet and then the overlaid parts of the sheet folded again along the second fold line to provide a compartment of the envelope in which the insert is to be nested whereby the insert is prevented by the second fold from moving to the window and obscuring the view of an address through the window.

French Specification No. FR-A-2323612 describes a continuous assembly of postal correspondence units. One of these units comprises a panel which has lines of adhesive adjacent four edges with assorted lines of perforations. The panel has two fold lines at right angles to each other to fold the panel into four parts. One of the parts has a window which when the panel is folded is in register with the area on an incorporated document carrying the name and address of the intended recipient.

British Specification No. GB-A-2150883 describes a continous blank letter form having lines of adhesive positioned to enable the individual envelope lengths to be closed by pressing the lines of adhesive together. The lines of adhesive are so arranged that the envelope lengths do not adhere together in a continuous form stack.

European Specification No. EP-A-088613 describes a postal form capable of being folded and adhered for postal despatch. The form has two regions to be folded one on to the other with one of the regions having extended sticking adhesive strips and the other region bearing no adhesive.

British Specification No. A-1593754 describes a continuous strip stationery divided into individual sheets foldable about a transverse line and foldable about a longitudinal line with bands of adhesive on the front and rear faces of the sheet which bands of adhesive are superimposed with the sheet as folded to form an envelope.

US Specification No. US-A-4023727 describes a mailing envelope structure comprising a single sheet with fold lines for folding the blank into four parts with strips which are trimmed from one of the four parts to expose marginal edge portions for securement purposes.

US Specification No. US-A-4375868 describes a single mailing sheet to be folded in half and in half again and with adhesive to secure the folded parts together and with an address area visible through a window in the sheet when folded.

From the standpoint of customer preference, as well as ease of printing computer-generated variable information on the mailer, the die-cut window is oftentimes not desirable. For example, a customer's computer printout programme or data entry requirements may not conform to the placement of the die-cut window on the mailer. Many customers require variable return addresses and these requirements often require two die-cut windows which, again, may not meet the printout or data entry requirements of the customer. Two die-cut windows also reduces available space on the mailer for substantive messages and the like. Also, certain printers may not accommodate forms with die-cut patched windows. Consequently, there is also a need for a single-ply mailer on which computer-generated variable information, may be printed such that the ply, when folded to form the mailer, may display address information. It is also desirable in such mailer to conceal the computer-generated information, ie the substantive message part, within the mailer. This type of mailer should also be capable of receiving an insert.

It is an object of the present invention to provide a novel and improved mailer for use with printers using computer-generated variable information.

### Summary of The Invention

The present invention provides a mailer comprising:
a generally rectilinear single ply paper sheet having respective orthogonally related edges;
first and second foldlines extending in the sheet generally perpendicular one to the other, generally parallel to the orthogonally related edges, respectively, and defining first and second panels and third and fourth panels of the sheet, respectively, with the first and second panels and the third and fourth panels lying on the opposite side of the first foldline, and the fourth and first panels and the second and third panels, respectively, lying on opposite sides of the second foldline;
first lines of adhesive along the edges of the sheet on one face thereof such that, when the sheet is folded about the first foldline to register the first and fourth panels one with the other and the second and third panels one with the other and to register portions of the second foldline each with the other, the corresponding edges of the folded sheet may be secured one to the other;
second lines of adhesive along edges of the face of the sheet opposite the said one face such that when the registering first and fourth panels and the second and third panels are folded about the registering second foldline the three corresponding edges of the fourth and third panels may be secured one to the other therealong whereby at least a four-ply mailer may be formed; and
lines of perforations extending along the margins of the sheet inset from the edges thereof and generally parallel thereto and inset from the lines of adhesive along said edges, the marginal lines of perforations registering one with the other when the sheet is folded about the first foldline, the registering marginal lines of perforations of the first and fourth panels lying in registration with the registering marginal lines of perforations of the second and third panels when the sheet is folded about the second foldline to form marginal tear strips about two sides of the mailer, characterised by additional lines of perforations on opposite sides of and adjacent to the first foldline and extending parallel thereto, the additional line of perforations on the third and fourth panels being inset from the line of adhesive adjacent the first fold line, the additional lines of perforations being registerable one with the other when the sheet is folded about the first foldline, the registering additional lines of perforations of the first and fourth panels lying in registration with the registering additional lines of perforations of the second and third when said sheet is folded about the second foldline to form an additional marginal tear strip along another side of the mailer whereby the marginal tear strips along three sides of the mailer may be removed, so that the thus opened mailer will be in two separated halves, and characterised in that the mailer does not have a die cut window.

The mailer preferably has marginal tear strips containing tractor holes outwardly of the panels along its longitudinal edges. Computer-generated substantive information may be printed on the face of a set of the panels, for example, on the left side of a vertical (first) foldline, and the outgoing address may be printed on one of the panels on the opposite side of the foldline. After printing, the single ply is folded backward onto itself along the vertical foldline substantially medially of the form's width, such that the outgoing address information lies in opposite orientation to the panels containing the substantive information. After removing the marginal feed strips, the forms are buckle-folded along the aligned second foldline portions located medially of the depth of the form such that the substantive information is concealed and the outgoing address is exposed on one face of the mailer. An insert can also be disposed within the mailer during the folding operation. Once folded, the mailer is disposed in a heat sealing machine to secure the edges of the now four-ply mailer.

An embodiment of mailer, in accordance with the invention will now be described by way of example only with reference to the accompanying drawings of which:

### BRIEF DESCRIPTION OF THE DRAWING FIGURES

Figure 1 is a plan view of a sheet from which a mailer may be made according to the present invention, illustrating the mailer as part of a continuous business form;
Figure 2 is a plan view of the reverse side of the mailer of Figure 1 turned left-to-right;
Figure 3 is a view of the mailer of Figure 1 with the righthand portion folded backwards and illustrating the front side of the righthand portion;
Figure 4 is a view of the four-ply mailer folded about the horizontal foldline ready for mailing;
Figures 4a and 4b are cross-sectional view thereof, prior to the margins being heat-sealed, taken generally about on lines 4a and 4b in Figure 4; and
Figure 5 is an enlarged plan view of the mailer as received by the recipient illustrating its various plies and the marginal tear strips.

### DETAILED DESCRIPTION OF THE DRAWING FIGURES

Reference will now be made in detail to a present preferred embodiment of the invention, an example of which is illustrated in the accompanying drawings.

In the first embodiment, a first sheet 100 extends horizontally from left edge 12 to right edge 14 and vertically from top edge 16 to bottom edge 18. Marginal strips 20 and 22 may be disposed along edges 12 and 14, each provided with tractor holes 24, to facilitate manufacture in customary printing and adhesive applicator machinery (not shown) and to facilitate continuous feeding through computer output printers. It will be appreciated that the sheet 100 comprises one of a plurality of such sheets joined one to the other by horizontal lines of perforations along edges 16 and 18 such that the sheets 100 form part of a continuous business form connected by lines of perforations 102.

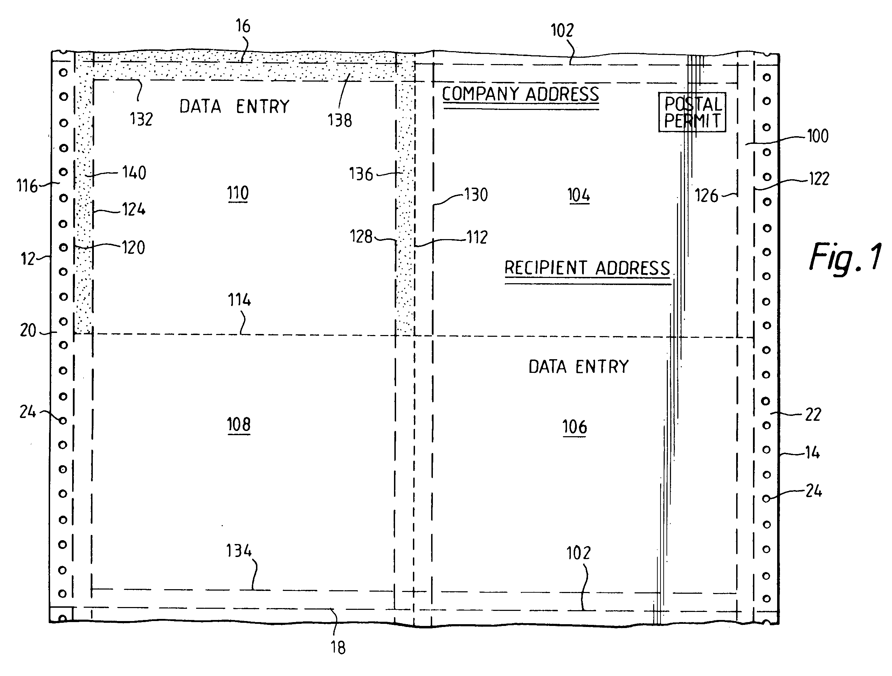

As shown form 100 is divided into first, second, third and fourth panels, preferably quadrants 104, 106, 108 and 110, respectively, by a pair of orthogonally related foldlines 112 and 114. Particularly, the foldline 112 extends vertically substantially medially of form 100 as illustrated in Figure 1 while the foldline 114 extends horizontally substantially medially between and parallel to the lines of perforation 102 in Figure 1. Consequently, the first and second panels 104 and 106 lie on opposite sides of the fold line 112 from the third and fourth panels 108 and 110. Also, the fourth and first panels 110 and 104 lie on oposite sides of the foldline 114 from the second and third panels 106 and 108, respectively.

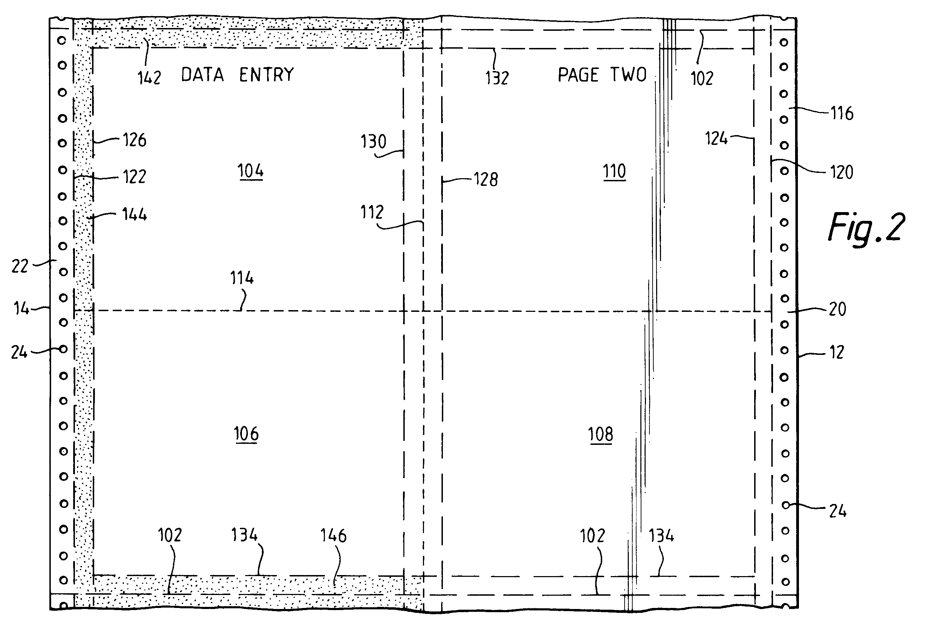

As illustrated in Figures 1 and 2, the first panel 104 on one face of the sheet may be provided with address information, for example, the address of the recipient and the return address of the entity mailing the mailer. The remaining panels may be employed for data entry, although it will be appreciated that panel 106 in Figure 1 will be exposed to view in the final form of the mailer, whereas data entered on panels 108 and 110, as illustrated in Figure 1 would be hidden from view in the final form of the mailer. The panels of the opposite side of the sheet illustrated in Figure 2 may also be used for data entry purposes.

Referring now to Figure 1, marginal feed strips 116 and 118 are provided along opposite edges of form 100 and have tractor openings whereby the form may be used in printers. The marginal feed strips 116 and 118 are connected to the form 100 along marginal lines of perforations 120 and 122, respectively. Additionally, lines of perforations 124 and 126, respectively, are inset from lines of perforations 120 and 122, respectively. Vertically extending lines of perforations 128 and 130 are also provided adjacent the foldline 112. Horizontal lines of perforations 132 and 134 are also provided on form 100 inset from the separation lines of perforations 102. A heat-activated, permanent-type adhesive is disposed along three sides of the margins of the form in the fourth panel 110. Particularly, a line of adhesive 136 is provided between foldline 112 and perforation line 128. A line of adhesive 138 is provided between the separation line of perforations 102 and perforation line 132. Finally, a line of adhesive 149 is provided between marginal line of perforations 120 and perforation line 124. It will be appreciated that panel 108 may be provided with adhesive in the same orientation as the lines of adhesive are applied to panel 110 in lieu of such adhesive in panel 110, as will become apparent from the ensuing description.

Turning now to Figure 2, on the reverse sides of panels 104, 106, lines of adhesive are provided along the outer edges thereof. Particuarly, a line of adhesive 142 is provided between the separation line of perforations 102 and perforation line 132 in panel 104. A line of adhesive 144 is provided along the edges of both panels 104 and 106 between the perforation lines 122 and 126. A final line of adhesive 146 is provided in panel 106 between the perforation lines 102 and 134.

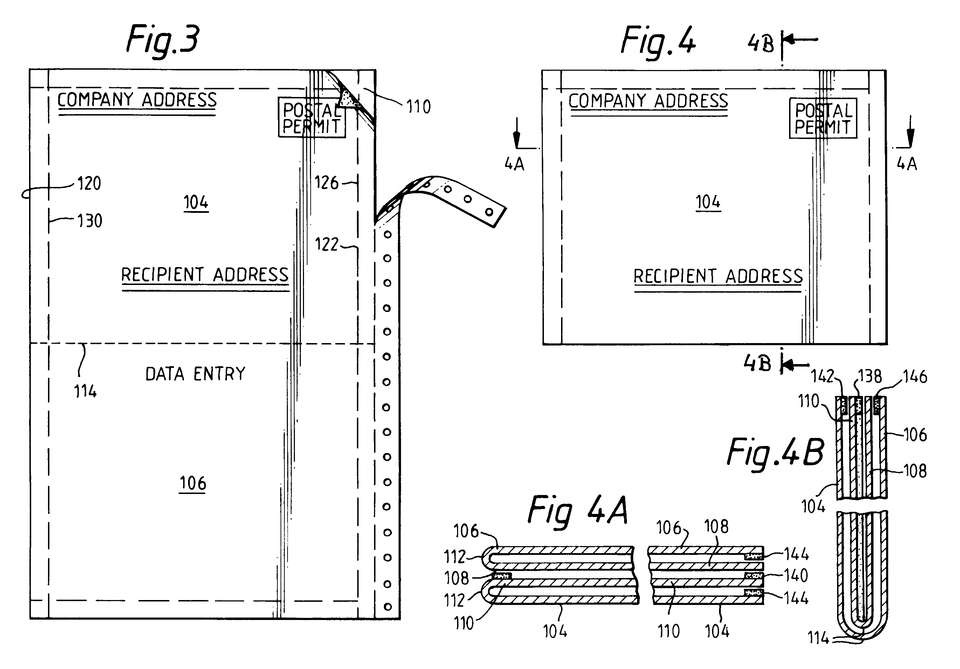

To fold the sheet 100 into a mailer in accordance with the present invention, the righthand portion illustrated in Figure 1, including panels 104 and 106, are folded backwardly about the foldline 112 such that the lines of adhesive thereof on the opposite sides, i.e., adhesive lines 142, 144 and 146, register with corresponding marginal strips along the edges of panels 110 and 108. The result of the first fold about foldline 112 is illustrated in Figure 3, wherein panels 108 and 110 lie behind panels 106 and 104, respectively. By such folding, it will be appreciated that the lines of perforations register one with the other, enabling the tear strips to be removed.

By folding the two-ply sheet illustrated in Figure 3 along the registering portions of foldline 114 such that panels 106 and 108 are folded backwardly, a mailer, as illustrated in Figure 4, is provided. Note that the recipient's address on the face of panel 104 is exposed to view. Also, when this final folding occurs about foldline 114, the adhesive strips 136, 138 and 140 register with the margins of the panel 108. By passing the folded mailer through a heat sealer, the adhesive is activated, whereby the various panels are secured about each of the three marginal edges of the mailer to close the mailer. When the fold about the second foldline 114 is made, it is possible to insert between panels 108 and 110, one or more inserts. Thus, upon sealing the mailer, the insert is captured within the adhesive margins of the mailer and the foldline 114.

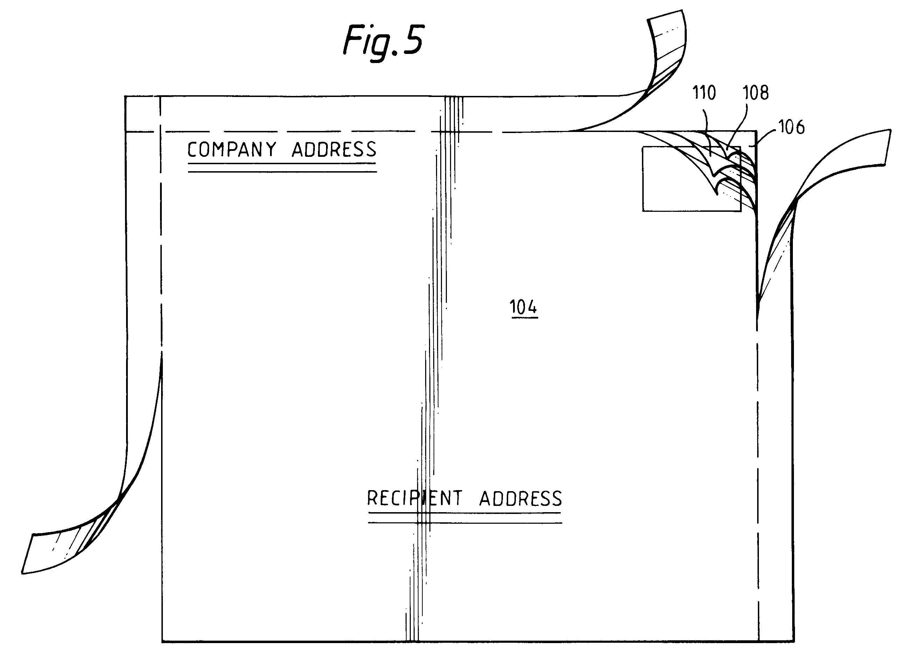

Referring now to Figure 5, the mailer, when received by the recipient, may be torn along the margins inset from the adhesive strips such that the mailer may be opened about foldline 114. The insert, if any, may then be removed and consequently, two sheets of the form are available and separated one from the other, i.e., the sheets containing panels 104 and 106 and the sheet containing panels 108 and 110.

## Claims

1. A mailer comprising:
a generally rectilinear single ply paper sheet (100) having respective orthogonally related edges (12, 14, 16, 18);
first (112) and second (114) foldlines extending in the sheet (100) generally perpendicular one to the other, generally parallel to the orthogonally related edges (12, 14, 16, 18), respectively, and defining first (104) and second panels (106) and third (108) and fourth (110) panels of the sheet (100), respectively, with the first and second panels and the third and fourth panels lying on the opposite side of the first foldline (112), and the fourth and first panels and the second and third panels, respectively, lying on opposite sides of the second foldline (114);
first lines of adhesive (142, 144, 146) along the edges of the sheet (100) on one face thereof such that, when the sheet is folded about the first foldline (112) to register the first and fourth panels one with the other and the second and third panels one with the other and to register portions of the second foldline each with the other, the corresponding edges (12, 14) of the folded sheet may be secured one to the other;
second lines of adhesive (136, 138, 140) along edges of the face of the sheet opposite the said one face such that when the registering first and fourth panels and the second and third panels are folded about the registering second foldline (114) the three corresponding edges of the fourth and third panels (16, 18) may be secured one to the other therealong whereby at least a four-ply mailer may be formed; and
lines of perforations (124, 126, 132, 134) extending along the margins of the sheet inset from the edges (12, 14, 16, 18) thereof and generally parallel thereto and inset from the lines of adhesive along said edges, the marginal lines of perforations (124, 126, 132, 134) registering one with the other when the sheet (100) is folded about the first foldline (112), the registering marginal lines of perforations of the first and fourth panels lying in registration with the registering marginal lines of perforations of the second and third panels when the sheet is folded about the second foldline (114) to form marginal tear strips about two sides of the mailer, characterised by additional lines of perforations (128, 130) on opposite sides of and adjacent to the first foldline (112) and extending parallel thereto, the additional line of perforations (128) on the third and fourth panels being inset from the line of adhesive (136) adjacent the first fold line, the additional lines of perforations (130, 128) being registerable one with the other when the sheet (100) is folded about the first foldline (112), the registering additional lines of perforations of the first (104) and fourth (110) panels lying in registration with the registering additional lines of perforations of the second (106) and third (108) panels when said sheet is folded about the second foldline (114) to form an additional marginal tear strip along another side of the mailer whereby the marginal tear strips along three sides of the mailer may be removed, so that the thus opened mailer will be in two separated halves, and characterised in that the mailer does not have a die cut window.

2. A mailer according to claim 1 characterised in that the first lines of adhesive (142, 144, 146) extend about the edges of the first (104) and second (106) panels coincident with the corresponding edges of the sheet (100).

3. A mailer according to claim 1 or claim 2 including an insert disposable between one of said first and fourth panels and said second and third panels when said sheet is folded about said first foldline.

4. A mailer according to any of claims 1 to 3 characterised in that individual addressee information is printed directly on the face opposite said one face of one of the first and second panels.

5. A mailer according to any of claims 1 to 4 characterised by a pair of marginal tear strips (20, 22) disposed along the opposite edges of said sheet outwardly of the edges of said panels and having tractor holes (24) therein longitudinally spaced one from the other.

6. A single ply continuous business form consisting of a plurality of consecutive and separable mailers each as claimed in any of claims 1 to 5.

## Patentansprüche

1. Versandfertiges Formular aus einem generell geradlinigen, einlagigen Papierbogen (100) mit jeweils orthogonal aufeinderstehenden Kanten (12, 14, 16, 18), das folgendes aufweist:
eine erste (112) und zweite (114) Faltlinie, die im Bogen (100) vertikal zueinander und parallel zu den orthogonal aufeinanderstehenden Kanten (12, 14, 16, 18) verlaufen und jeweils ein erstes (104) und zweites (106) Feld, sowie ein drittes (108) und viertes (110) Feld des Bogens (100) bilden, wobei das erste und zweite Feld dann dem dritten und vierten Feld an der ersten Faltlinie (112) gegenüberliegen und das vierte und erste Feld dann dem zweiten und dritten Feld an der zweiten Faltlinie (114) gegenüberliegen;
erste Haftlinien (142, 144, 146) längs der Kanten des Bogens (100) und auf einer Seite davon, in der Weise, daß beim Falten des Bogens um die erste Faltlinie (112), das erste und vierte Feld und das zweite und dritte Feld, sowie Teile der zweiten Faltlinie jeweils miteinander in Auflage gebracht werden, so daS die korrespondierenden Kanten (12, 14) des gefalteten Bogens miteinander befestigt werden können;
zweite Haftlinien (136, 138, 140) längs der Kanten der Seite des Bogens, die gegenüber der besagten einen Seite liegen, in der Weise, daß bei Faltung des aufliegenden ersten und vierten Feldes sowie des zweiten und dritten Feldes um die aufliegende zweite Faltlinie (114) drei korrespondierenden Kanten des vierten und dritten Feldes (16, 18) miteinander längs dieserbefestigt werden können, wodurch ein versandfertiges Formular aus wenigstens vier Lagen entsteht;
Trennlinien (124, 126, 132, 134), die sich längs und parallel zu den Randabschnitten der Kanten (12, 14, 16, 18) des Bogeninnabschnitts erstrecken und gegenüber den Haftlinien längs dieser Kanten nach innen versetzt sind, so daß bei Faltung des Bogens (100) um die erste Faltlinie (112) die Randabschnittslinien der Trennlinien (124, 126, 132, 134) aufeinander liegen, und daß bei Faltung des Bogens um die zweite Faltlinie (114) die aufeinanderliegenden Randabschnittslinien der Trennlinien des ersten und vierten Feldes in Deckung sind mit den aufeinanderliegenden Randabschnittslinien der Trennungslinien des zweiten und dritten Feldes, um an zwei Seiten Abreißstreifen an den Randabschnitten des versandfertigen Formulars zu bilden,
der dadurch gekennzeichnet ist, daß
zusätzliche Trennlinien (128, 130), die sich auf den gegenüberliegenden Seiten nahe der ersten Faltlinie (112) und parallel dazu erstrecken, wobei die zusätzliche Trennlinie (128) auf dem dritten und vierten Feld auf der Innenseite der Haftlinie (136) nahe der ersten Faltlinie liegt, daß bei Faltung des Bogens (100) um die erste Faltlinie (112) die Trennlinien (130, 128) miteinander in Deckung gebracht werden können, daß bei Faltung des Bogens um die zweite Faltlinie (114) die aufeinanderliegenden Trennlinien des ersten (104) und vierten (110) Feldes in Deckung sind mit den aufeinanderliegenden Trennlinien des zweiten (106) und dritten (108) Feldes, so daß ein zusätzlicher Randabschnitts-Abreißstreifen längs dreier Seiten des versandfertigen Formulars geformt wird, und durch Entfernen desselben das geöffnete Formular in zwei Hälften getrennt wird, und weiterhin gekennzeichnet, daß das versandfertige Formular kein ausgespartes Fester aufweist.

2. Das versandfertige Formular nach Anspruch 1 dadurch gekennzeichnet, daß sich die ersten Haftlinien (142, 144, 146) um die Kanten des ersten (104) und zweiten (106) Feldes erstrecken, die mit den korrespondierenden Kanten des Bogens (100) zusammenfallen.

3. Das versandfertige Formular nach Anspruch 1 oder Anspruch 2 mit einer Einlage, die aus dem Raum zwischen einem der genannten ersten und vierten Felder entnommen werden kann, wenn der Bogen um die erste Faltlinie gefaltet wird.

4. Das versandfertige Formular nach einem der Ansprüche 1 bis 3 dadurch gekennzeichnet, daß individuelle Informationen den Adressaten betreffend direkt auf die Seite gedruckt werden, die der einen Seite eines ersten oder zweiten Feldes gegenüberliegt.

5. Das versandfertige Formular nach einem der Ansprüche 1 bis 4 gekennzeichnet durch ein Paar Randabreißstreifen (20, 22) längs gegenüberliegenden Kanten des Bogens an der Außenseite der Kanten der Felder, wobei diese Streifen (20, 22) in Längsrichtung beabstandete Vorschublöcher (24) aufweisen.

6. Ein einlagiges, endloses Geschäftsformular das jeweils eine Vielzahl von fortlaufenden und abtrennbaren, versandfertigen Formularen umfasst, nach einem der Ansprüche 1 bis 5.

## Revendications

1. Une enveloppe comprenant :
une feuille de papier (100) rectangulaire dans l'ensemble, d'une seule épaisseur, présentant des bords (12, 14, 16, 18) orthogonaux les uns par rapport aux autres ;
une première (112) et une deuxième (114) lignes de pliage s'étendant sur la feuille (100), dans leur ensemble perpendiculaires l'une par rapport à l'autre, parallèles aux bords (12, 14, 16, 18) orthogonaux et définissant un premier (104) et un deuxième (106) panneaux, et un troisième (108) et un quatrième (110) panneaux de la feuille (100), respectivement, le premier et le deuxième panneaux d'une part, et le troisième et le quatrième panneaux d'autre part, étant situés de chaque côté de la première ligne de pliage (112) et le quatrième et le premier panneaux d'une part, et le deuxième et le troisième panneaux d'autre part, étant situés respectivement de chaque côté de la deuxième ligne de pliage (114) ;
des premières lignes d'adhésif (142, 144, 146) disposées le long des bords de la feuille (100) sur une face de celle-ci, de telle façon que, lorsque la feuille est pliée selon la première ligne de pliage (112), pour faire coïncider le premier et le quatrième panneaux l'un avec l'autre, et le deuxième et le troisième panneaux l'un avec l'autre, et pour faire coïncider des parties de la deuxième ligne de pliage l'une avec l'autre, les bords correspondants (12, 14) de la feuille pliée peuvent être collés l'un sur l'autre ;
des deuxièmes lignes d'adhésif (136, 138, 140) disposées le long des bords de la face de la feuille opposée à la face susmentionnée, de telle façon que, lorsque le premier et le quatrième panneaux coïncidents et le deuxième et le troisième panneaux coïncidents sont pliés selon la deuxième ligne de pliage (114) coïncidente, les trois bords coïncidents des troisièmes et quatrième panneaux (16, 18) peuvent être collés l'un sur l'autre, si bien qu'une enveloppe d'au moins quatre épaisseurs peut être constituée ; et
des lignes de perforations (124, 126, 132, 134) s'étendant le long des marges de la feuille, à l'intérieur des bords (12, 14, 16, 18) de celle-ci, dans l'ensemble parallèlement à celles-ci et à l'intérieur par rapport aux lignes d'adhésif situées le long desdits bords, ces lignes marginales de perforations (124, 126, 132, 134) coïncidant l'une avec l'autre lorsque la feuille (100) est pliée selon la première ligne de pliage (112), les lignes de perforations marginales coincidentes des premier et quatrième panneaux coïncidant avec les lignes de perforations marginales coïncidentes du second et troisième panneaux lorsque la feuille est pliée selon la deuxième ligne de pliage (114), pour former des bandes détachables marginales, sur deux côtés de l'enveloppe,
caractérisée par des lignes de perforations supplémentaires (128, 130) placées sur des côtés opposés éloigné de la première ligne de pliage (112) et adjacentes à celle-ci et s'étendant parallèlement à celle-ci, la ligne de perforations supplémentaires (128) sur les troisième et quatrième panneaux étant située à l'intérieur de la ligne d'adhésif (136) adjacente à la première ligne de pliage, les lignes de perforations (130, 128) supplémentaires pouvant coïncider l'une avec l'autre lorsque la feuille (100) est pliée selon la première ligne de pliage (112), les lignes de perforations supplémentaires coïncidentes, des premier (104) et troisième panneaux (110), coïncidant avec les lignes de perforations supplémentaires coïncidentes des deuxième (106) et troisième panneaux (108), lorsque ladite feuille est pliée selon la deuxième ligne de pliage (114), pour former une bande détachable marginale supplémentaire, le long d'un autre côté de l'enveloppe, les bandes détachables le long de trois côtés de l'enveloppe pouvant être retirées, de sorte que l'enveloppe ainsi ouverte est constituée de deux moitiés séparées,
et caractérisée en ce que l'enveloppe ne comporte pas de fenêtre découpée à l'emporte-pièce.

2. Une enveloppe selon la revendication 1, caractérisée en ce que les premières lignes d'adhésif (142, 144, 146) s'étendent le long des bords du premier (104) et du deuxième (106) panneaux coïncidents avec les bords correspondants de la feuille (100).

3. Une enveloppe selon l'une quelconque des revendications 1 ou 2, comprenant un insert jetable, entre l'un desdits premier et quatrième panneaux et desdits deuxième et troisième panneaux, lorsque ladite feuille est pliée selon ladite première ligne de pliage.

4. Une enveloppe selon l'une quelconque des revendications 1 à 3,
caractérisée en ce qu'une information individuelle concernant le destinataire est imprimée directement sur la face opposée à la face susmentionnée de l'un des premier et deuxième panneaux.

5. Une enveloppe selon l'une quelconque des revendications 1 à 4,
caractérisée par une paire de bandes marginales d'arrachement (20, 22), disposées le long des bords opposés de ladite feuille, extérieurement par rapport aux bords desdits panneaux et présentant des trous d'entraînement (24), espacés l'un de l'autre dans le sens longitudinal.

6. Un imprimé d'affaires continu, d'une seule épaisseur, consistant en une pluralité d'enveloppes consécutives et séparables, chacune selon l'une quelconque des revendications 1 à 5.
